# EUROPÄISCHE PATENTSCHRIFT

(11) **EP 4 042 106 B1**
(45) Veröffentlichungstag und Bekanntmachung des Hinweises auf die Patenterteilung: **06.12.2023**
(21) Anmeldenummer: 20788784.5
(22) Anmeldetag: 08.10.2020
(51) Int. Cl.: G01C 21/26, B62J 45/20, B62J 50/21, B62M 6/45

(54) **VERFAHREN ZUR ERKENNUNG EINER ZIELPOSITION EINER ANZEIGE- UND/ODER STEUEREINHEIT IN EINER HALTEVORRICHTUNG SOWIE ENTSPRECHENDE ANZEIGE- UND/ODER STEUEREINHEIT**
METHOD FOR IDENTIFYING A TARGET POSITION OF A DISPLAY- AND/OR CONTROL UNIT IN A HOLDING DEVICE, AND CORRESPONDING DISPLAY- AND/OR CONTROL UNIT
PROCÉDÉ D'IDENTIFICATION D'UNE POSITION CIBLE D'UNE UNITÉ D'AFFICHAGE ET/OU DE COMMANDE DANS UN DISPOSITIF DE MAINTIEN, ET UNITÉ D'AFFICHAGE ET/OU DE COMMANDE CORRESPONDANTE

(30) Priorität: 10.10.2019 DE 102019215537
(43) Veröffentlichungstag der Anmeldung: 17.08.2022
(73) Patentinhaber: Robert Bosch GmbH, 70442 Stuttgart (DE)
(72) Erfinder: CARELLO, Francesco, 65936 Frankfurt Am Main (DE); SCHWEICKHARDT, Heiko Michael, 63477 Maintal (DE); LINDSTEDT, Carsten, 60388 Frankfurt Am Main (DE)
(86) Internationale Anmeldenummer: PCT/EP2020/078238
(87) Internationale Veröffentlichungsnummer: WO 2021/069561

(56) Entgegenhaltungen:
- EP-B1- 2 709 870
- DE-U1-202014 101 923
- JP-A- 2003 202 229
- US-A1- 2015 006 099
- US-A1- 2015 172 432
- US-A1- 2017 166 140
- US-B2- 9 891 054

## Beschreibung

Die Erfindung betrifft ein Verfahren und ein Computerprogramm zur Erkennung einer Zielposition einer Anzeige- und/oder Steuereinheit in einer Haltevorrichtung sowie eine entsprechende Anzeige- und/oder Steuereinheit.

### Stand der Technik

Sowohl im Kraftfahrzeugbereich als auch bei Zweirädern besteht der Bedarf der Befestigung von Anzeige- und/oder Steuereinheiten wie Navigationsgeräten, Tachometern oder Smartphones im Sichtbereich des Nutzers. Hierbei wird von manchen Anbietern ein Bajonett-Verschluss verwendet, der zunächst ein Einsetzen der Anzeige- und /oder Steuereinheit in eine Halterung mit anschließender Verdrehung erfordert. Nachdem die Anzeige- und/oder Steuereinheit so arretiert worden ist, kann der Nutzer die Funktion dieser Einheit aktivieren. In der US 9,891,054 B2 und in der US 2015/0006099 A1 sind mobile Endgeräte beschrieben, die über Haltevorrichtungen mit Fahrzeugen verbindbar ausgebildet sind.

Mit der vorliegenden Erfindung soll ein Verfahren sowie eine das Verfahren ausführende Vorrichtung beansprucht werden, bei dem die ordnungsgemäße Halterung und/oder Orientierung der Anzeige- und/oder Steuereinheit für die Durchführung der weiteren Funktionen in der Haltevorrichtung vorliegt.

### Offenbarung der Erfindung

Das erfindungsgemäße Verfahren beziehungsweise ein Computerprogramm, welches das Verfahren ausführt sowie eine Vorrichtung, auf der das Verfahren oder das Computerprogramm ausgeführt wird, ist dazu geeignet, die Zielposition einer Anzeige- und/oder Steuereinheit, zum Beispiel eine Rastposition, in einer Haltevorrichtung zu erkennen. Dabei kann die Zielposition derart definiert sein, dass die Anzeige- und/oder Steuereinheit in dieser Zielposition eine vorgegebene Orientierung oder Anordnung in Bezug auf die Haltevorrichtung einnimmt, in der sie gehalten beziehungsweise arretiert oder fixiert ist. Weiterhin ist denkbar, dass die Zielposition derart vorgegeben ist, dass sie eine optimierte Datenverbindung zwischen der Anzeige- und/oder Steuereinheit und einem Sende- und/oder Empfangsmodul an oder in der Haltevorrichtung ermöglicht. Selbstverständlich kann diese optimierte Datenverbindung auch zu einem anderen oder weiteren Sende- und/oder Empfangsmodul ermöglicht werden, welches am Fahrzeug angebracht oder integriert ist, an dem die Haltevorrichtung angebracht ist.

Zur Erkennung der Zielposition erfasst das Verfahren beziehungsweise das Computerprogramm eine erste Messgröße eines Sensors der Anzeige- und/oder Steuereinheit. Hierbei soll im Wesentlichen eine Sensorgröße erfasst werden, die die Position oder die Ausrichtung der Anzeige- und/oder Steuereinheit repräsentiert, zum Beispiels eines mobilen Endgeräts. Weiterhin wird als zweite Messgrö-ße ein Sendesignal eines Drahtlos-Signalübertragungsmoduls erfasst, zum Beispiels eines Bluetooth-Moduls, welches in der Haltevorrichtung integriert ist oder am Fahrzeug, an dem die Haltevorrichtung angebracht ist. Die Erkennung der Zielposition beziehungsweise eine Erzeugung einer Information in Abhängigkeit der Erreichung der Zielposition erfolgt anschließend mittels eines Vergleichs der ersten Messgröße mit einer ersten Vergleichsgröße und eines weiteren Vergleichs der zweiten Messgröße mit einer zweiten Vergleichsgröße.

So wird beispielsweise bei der Erkennung des Einsetzens der Anzeige- und/oder Steuereinheit in die Halterung mit nachfolgender Drehbewegung im Bajonett-Verschluss mit gleichzeitiger Steigerung der empfangenen Signalstärke des Sendesignals des Drahtlos-Signalübertragungsmoduls davon ausgegangen, dass eine Arretierung beziehungsweise Fixierung der Anzeige- und/oder Steuereinheit in der Haltevorrichtung erfolgt ist. Mit dieser Erkenntnis kann automatisch die Steuerfunktion in der Anzeige- und/oder Steuereinheit aktiviert werden, ohne dass der Nutzer dies manuell vornehmen muss. Somit wird die Steuerungsfunktion aber auch die Anzeigefunktion für übertragene Informationen schneller zur Verfügung gestellt.

Mit der ersten Messgröße des Sensors in der Anzeige- und/oder Steuereinheit wird eine Ortsgröße oder Orientierung erfasst. Dabei kann es sich beispielsweise um eine Ausrichtung der Anzeige- und/oder Steuereinheit handeln aber auch um eine spezielle Ortskoordinate. Weiterhin ist denkbar, dass auch mehrere erste Messgrößen erfasst werden, mittels der eine Bewegung der Anzeige- und/oder Steuereinheit erkannt werden kann. Diese erste Messgröße beziehungsweise der zeitliche Ablauf mehrerer erster Messgrößen wird nachfolgend mit einer (oder mehrerer) Vergleichsgröße(n) verglichen, die einer Startposition oder einem Arretierungsvorgang entsprechen. So kann beispielsweise vorgesehen sein, dass über die erste Vergleichsgröße das Ansetzen der Anzeige- und/oder Steuereinheit auf eine entsprechende Halterung der Haltevorrichtung erkannt wird. Alternativ ist auch denkbar, dass die erste Vergleichsgröße eine erste vorgegebene Orientierung der Anzeige- und/oder Steuereinheit in Bezug auf die Aufnahme der Haltevorrichtung repräsentiert, so dass ein korrektes Einsetzen in die Haltevorrichtung erkannt wird.

In einer Ausgestaltung der Erfindung kann vorgesehen sein, dass die Erfassung mehrerer erster Messgrößen eine Lageveränderung der Anzeige- und/oder Steuereinheit und insbesondere eines mobilen Endgeräts wie einem Smartphone erfasst. Hierzu eigenen sich beispielsweise die Sensorwerte eines Beschleunigungssensors oder eines Drehratensensors. Es ist jedoch auch möglich, mittels eines Lichtsensors über die Helligkeitsunterschiede eine Bewegung, insbesondere eine zu erwartenden Bewegung in der Haltevorrichtung, zu erkennen. Die erste Vergleichsgröße repräsentiert in diesem Fall die Bewegung des Anzeige- und/oder Steuereinheit, die durch einen Vergleich mit der ersten Messgröße erkannt werden kann.

Die Erkennung des Erreichens der Zielposition erfolgt zusätzlich durch die Erfassung eines Sendesignals eines Drahtlos-Signalübertragungsmoduls, zum Beispiel eines Bluetooth-Moduls, welches an der Haltevorrichtung oder an einem Fahrzeug angebracht ist, an dem die Haltevorrichtung befestigt ist. Das Sendesignal kann dabei mittels eines entsprechenden Empfangsmoduls in der Anzeige- und/oder Steuereinheit erfasst werden. Durch die Kenntnis sowohl des Anbringungsortes des Drahtlos-Signalübertragungsmoduls sowie der Sendeleistung des Drahtlos-Signalübertragungsmoduls kann ein Signalschwellenwert als zweite Vergleichsgröße festgelegt werden, bei dem die ordnungsgemäße Halterung der Anzeige- und/oder Steuereinheit in der Haltevorrichtung gemäß der vorgesehenen Zielposition vorliegt. Überschreitet nun die zweite Messgröße diesen Signalschwellenwert oder erreicht ihn, kann das Verfahren beziehungsweise das System bestehend aus Verfahren oder Computerprogramm sowie Anzeige- und/oder Steuereinheit davon ausgehen, dass sich die Anzeige- und/oder Steuereinheit in der vorgegebenen Zielposition befindet.

Optional kann vorgesehen sein, dass eine weitere Bedingung erfüllt sein muss, bevor das Verfahren die Zielposition erkennt. Hierbei kann die Haltevorrichtung elektrische Kontakte aufweisen, die erst in der Zielposition mit elektrischen Kontakten der Anzeige- und/oder Steuereinheit in elektrischem Wirkverbindung treten. Dies kann beispielsweise dadurch erreicht werden, dass Anschlusselemente des mobilen Endgeräts an entsprechende Anschlusselemente der Haltevorrichtung anliegen. Wird dabei durch die Anzeige- und/oder Steuereinheit oder die Haltevorrichtung bei diesen elektrischen Kontakten eine Strom-, Spannungs- oder Widerstandsmessung durchgeführt, kann ein Anliegen und somit die Zielposition erkannt werden.

In einer besonderen Ausgestaltung der Erfindung ist vorgesehen, dass eine bestehende Drahtlosverbindung zwischen Anzeige- und/oder Steuereinheit und Haltevorrichtung beziehungsweise Drahtlos-Signalübertragungsmodul vor dem Einsetzen in die Haltevorrichtung besteht. Hierbei kann über die Drahtlosverbindung die erste und/oder die zweite Vergleichsgröße übertragen werden, mittels der das Einsetzen und die Erreichung der Zielposition erkannt werden kann. Der Vorteil an einer derartigen Übertragung der entsprechenden Vergleichsgrößen von der Haltevorrichtung oder dem Fahrzeug, an dem die Haltevorrichtung befestigt ist, an die Anzeige- und/oder Steuereinheit ist, dass die übertragenen Vergleichsgrößen die spezifischen Geometrien und Bedingungen enthalten können, wie sie bei der Haltevorrichtung vorliegen. So kann die zweite Vergleichsgröße einen auf den einzuhaltenden und erforderlichen geometrischen Abstand zwischen Zielposition und Bluetooth-Modul abgestimmten Signalschwellenwert enthalten.

Optional kann vorgesehen sein, dass die erste und/oder zweite Vergleichsgröße einen Wertebereich aufweist, beispielsweise 1 %, 2%, 5 % oder 10 % um einen Mittelwert herum. Hierdurch lassen sich Fertigungsgenauigkeiten oder variierende Anbauverhältnissen der Haltevorrichtung am Fahrzeug ausgleichen.

Die vorliegende Erfindung kann besonders vorteilhaft bei Zweirädern wie beispielsweise Fahrrädern und Elektrofahrrädern angewandt werden. So kann beispielsweise die Verwendung eines Smartphones als Geschwindigkeitsanzeige oder Steuereinheit für den Elektromotor genutzt werden. Hierzu ist jedoch eine entsprechende sichere Halterung in der zugehörigen Haltevorrichtung notwendig, um eine ungewollte Beschädigung durch ein Herausfallen oder durch eine ungenaue Arretierung zu verhindern. Weiterhin ist gerade bei drahtlosen Datenübertragungen, zum Beispiel über Bluetooth, eine definierte Signalstärke gewünscht, um die Steuerung aber auch die Rückmeldung der Daten vom Zweirad sicherzustellen. Hierzu ist eine Mindeststärke des Signalempfangs erforderlich, der durch eine gezielte Einstellung eines Mindestabstands vom Sendemodul in der Haltevorrichtung zum Empfangsmodul des Smartphones erreicht wird. Gleiches gilt selbstverständlich auch für die Aussendung der Steuersignale vom Smartphone an das Empfangsmodul des Bluetooth-Moduls.

### Kurze Beschreibung der Zeichnungen

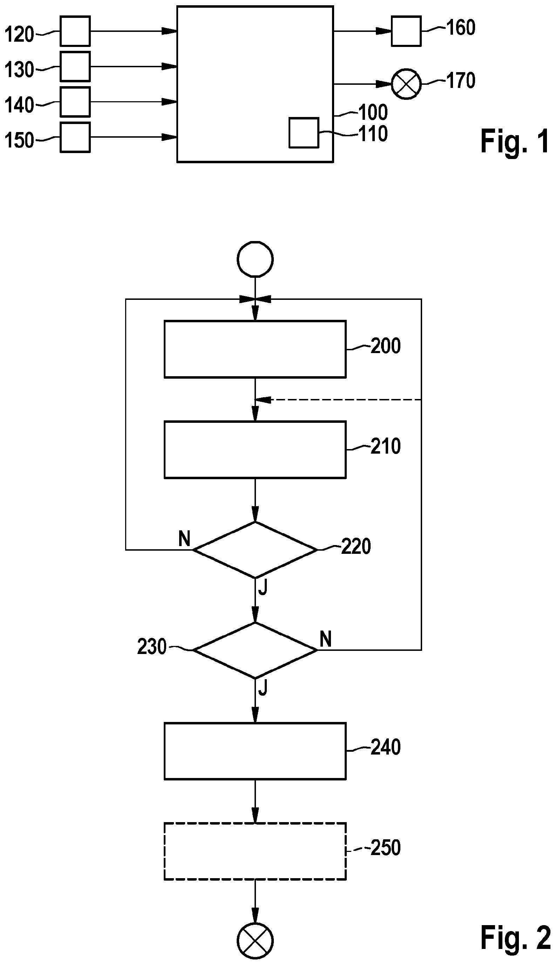

Das Blockschaltbild in Figur 1 zeigt schematisch eine erfindungsgemäße Auswerteeinheit, wie sie beispielsweise in einer Anzeige- und/oder Steuereinheit vorgesehen sein kann. Eine Möglichkeit zur Ausgestaltung des erfindungsgemäßen Verfahrens ist im Flussdiagramm der Figur 2 dargestellt.

### Ausführungsformen der Erfindung

Anhand des Blockschaltbildes der Figur 1 wird das Prinzip einer Vorrichtung beschrieben, welche das erfindungsgemäße Verfahren beziehungsweise das entsprechende Computerprogramm ausführt. Hierbei ist eine Steuereinheit 100 vorgesehen, welche zur Auswertung der erfassten Messgrößen geeignet ist. Diese Steuereinheit 100 kann als selbständige Einheit auf eine Haltevorrichtung angebracht werden oder Teil einer übergeordneten Vorrichtung sein, die in die Haltevorrichtung eingebracht und schlussendlich arretiert oder fixiert wird. Insbesondere kann vorgesehen sein, dass die Steuereinheit 100 Teil einer Anzeigeeinheit, zum Beispiel eines Geschwindigkeitsanzeigers ist. Darüber hinaus kann die Steuereinheit 100 auch Teil eines mobilen Endgeräts sein, wie beispielsweise eines Smartphones.

Die Steuereinheit 100 weist optional einen Speicher 110 auf, in dem Vergleichsgrößen zur Durchführung des Verfahrens beziehungsweise zur Erkennung der Zielposition abgespeichert sein können. Weiterhin erfasst die Steuereinheit 100 erste Messgrößen eines Sensors 120, der in der Anzeige- und/oder Steuereinheit 100 beziehungsweise im mobilen Endgerät vorhanden ist. Hierbei kann es sich um einen Beschleunigungssensor, einen Drehratensensor, einen Lagesensor, einen Neigungssensor, einen Sensor zur Erfassung eines Winkels aber auch um ein GPS oder anderes Ortsidentifikationsmodul handeln. Weiterhin erfasst die Steuereinheit 100 zweite Messgrößen eines Drahtlos-Signalübertragungsmoduls 130, zum Beispiel eines Bluetooth-Moduls, welches an der Haltevorrichtung vorgesehen ist, in den die Anzeige- und/oder Steuereinheit 100 eingesetzt werden soll. In einer nicht beanspruchten Ausführungsform kann das Drahtlos-Signalübertragungsmoduls auch getrennt von der Haltevorrichtung an einem Fahrzeug angebracht sein, an dem die Haltevorrichtung befestigt ist. Weiterhin ist optional möglich, dass eine elektrische Verbindung über elektrische Kontakte 140 an der Anzeige- und/oder Steuereinheit 100 erfasst wird. Weiterhin optional kann eine drahtlose Verbindung vorgesehen sein, mittels der das Drahtlos-Signalübertragungsmodul 130 oder ein weiteres Sendemodul 150 entsprechende erste und/oder zweite Vergleichsgrößen an die Anzeige- und/oder Steuereinheit sendet. Die so ausgesendeten und von der Anzeige- und/oder Steuereinheit 100 empfangen und abgespeicherten Vergleichsgrößen können somit individuell auf die vorgesehenen Abmessungen, Geometrien und/oder Anordnungen der Haltevorrichtung sowie der Anordnung des Drahtlos-Signalübertragungsmoduls 130 an dem Fahrzeug abgestimmt werden.

Nach der Erkennung, dass die Anzeige- und/oder Steuereinheit 100 die Zielposition in der Haltevorrichtung erreicht hat, kann die Auswerteeinheit in der Anzeige- und/oder Steuereinheit 100 automatisch eine Funktion der Anzeige- und/oder Steuereinheit 100 oder einer Komponenten 160 des Fahrzeugs ansteuern. Optional oder zusätzlich kann der Nutzer auch über die Erkennung der Erreichung der Zielposition optisch oder akustisch mittels einer entsprechenden Einrichtung 170 informiert werden.

Die Zielposition kann als Rastposition der Anzeige- und/oder Steuereinheit 100 in der Haltevorrichtung festgelegt sein, in der die Anzeige- und/oder Steuereinheit 100 arretiert oder fixiert ist. Somit wird verhindert, dass die Anzeige- und/oder Steuereinheit 100 ohne weiteres Zutun des Nutzers entfernt wird oder aus der Haltevorrichtung herausfällt. Weiterhin kann die Zielposition als bevorzugte Orientierung der Anzeige- und/oder Steuereinheit 100 in der Haltevorrichtung festgelegt werden. So kann beispielsweise vorgesehen sein, dass bei der Nutzung eines Smartphones der Bildschirm in der Haltervorrichtung gezielt längs angebracht ist, um eine möglichst breite Darstellung zu ermöglichen. Derartige Darstellungen sind beispielsweise für Navigationszwecke förderlich. Alternativ kann vorgesehen sein, dass der Bildschirm in Längsrichtung ausgerichtet sein soll, um möglichst wenig Raum am Lenker eines Zweirads einzunehmen.

Nach dem Start des Verfahrens oder des Computerprogramms wird in einem Schritt 200 wenigstens eine erste Messgröße eines Sensors 120 in der Anzeige- und/oder Steuereinheit 100 erfasst. Diese erste Messgröße kann beispielsweise eine Sensorgröße eines Beschleunigungssensors, eines Drehratensensors, eines Helligkeitssensors, allgemein eines Lagesensors oder eines Neigungssensors sein. Selbstverständlich kann auch eine Kombination von Sensorgrößen erfasst werden, um die Orientierung und/oder Positionierung der Anzeige- und/oder Steuereinheit 100 in Relation zur Haltevorrichtung zu detektieren. In einem weiteren Schritt 210 wird ein Sendesignal eines Bluetooth-Moduls 130 erfasst. Die beiden Schritten 200 und 210 können dabei nacheinander, parallel oder unabhängig von der nachfolgenden Auswertung der Messgrößen ab Schritt 220 erfasst werden. Weiterhin ist denkbar, dass mehrere Messgrö-ßen erfasst werden, um eine zeitliche Veränderung der Messgrößen zu erfassen. Hierdurch lässt sich eine Bewegung der Anzeige- und/oder Steuereinheit 100 oder eine Veränderung der Signalstärke des Drahtlos-Signalübertragungsmoduls 130 erkennen.

Zur Auswertung der erfassten ersten und zweiten Messgrößen wird im Schritt 220 die erste Messgröße mit einer ersten Vergleichsgröße verglichen. Hierdurch kann festgestellt werden, ob die Anzeige- und/oder Steuereinheit 100 in der Haltevorrichtung eingebracht wird. Durch die weitere Erfassung von ersten Messgrößen des gleichen oder eines anderen Sensors kann erkannt werden, ob die Bewegung der Anzeige- und/oder Steuereinheit 100 dazu geeignet ist, die Arretierung und/oder Fixierung in der Haltevorrichtung zu ermöglichen. So kann durch die Sensorgrößen eine Drehung erkannt werden, die für die Verwendung eines Bajonett-Verschlusses typisch ist. Mittels der Sensorgrößen kann jedoch auch eine Schiebebewegung erkannt werden, die ebenfalls bei einigen bekannten Haltekonzepten zum Einsatz kommt. Wird keine typische Bewegung für die Arretierung oder Fixierung der Anzeige- und/oder Steuereinheit 100 in der Haltevorrichtung durch den Vergleich im Schritt 220 erkannt, kann das Verfahren erneut mit der Erfassung der ersten Messgrößen durchlaufen werden.

In einem weiteren Schritt 230 wird die erfasste zweite Messgröße mit einer zweiten Vergleichsgröße verglichen. Die zweite Vergleichsgröße stellt dabei eine Mindestsignalstärke dar, die erreicht werden muss, um eine sichere Arretierung der Anzeige- und/oder Steuereinheit 100 in der Haltevorrichtung zu erkennen. Gleichzeitig stellt die Mindestsignalstärke auch sicher, dass die drahtlose Übertragung ausreichend für die Aussendung von Steuersignalen sowie zum Empfang von Betriebsparametern ist. Der Schritt 230 kann sowohl vor oder nach dem Schritt 220 erfolgen als auch unabhängig von diesem Schritt. Wird erkannt, dass die Mindestsignalstärke nicht erreicht wird, kann erneut mit der Erfassung von Messgrößen im Schritt 200 begonnen werden oder alternativ nur neue zweite Messgrößen im Schritt 210 erfasst werden.

Wird im Schritt 220 erkannt, dass eine zur Arretierung geeignete Bewegung durchgeführt worden ist und liegt die Sendestärke des empfangenen Signals des Drahtlos-Signalübertragungsmoduls oberhalb einer Mindestsignalstärke wird im nachfolgenden Schritt 240 ein Signal erzeugt, welches das korrekte Erreichen der Zielposition, der Rastposition oder der gewünschten Orientierung der Anzeige- und/oder Steuereinheit 100 repräsentiert. Dieses Signal kann dem Nutzer des Fahrzeugs optisch oder akustisch mitgeteilt werden.

In einer weiteren Ausführungsform der Erfindung können die ersten und/oder zweite Vergleichsgröße als Größenintervall angegeben werden. So ist denkbar, dass die Mindestsignalstärke ausgehend von einem Mittelwert als erreicht angesehen wird, wenn die Abweichung zum Mittelwert 1 %, 2%, 5% oder 10 % beträgt. Optional kann eine derartige Erhöhung der Toleranz zur Erkennung der Zielposition auch vom Nutzer ausgewählt werden. Denkbar ist dieser Fall beispielsweise, falls die Haltevorrichtung getrennt von dem Bluetooth-Modul am Fahrzeug, zum Beispiel am Lenker angebracht wird und aus Platzgründen der Abstand vergrößert werden muss.

Optional kann in einem weiteren Schritt 250 ausgehend von der Erkennung der Erreichung der Zielposition eine Steuerung von Komponenten des Zweirads erfolgen, an dem die Haltevorrichtung angebracht ist. So kann beispielsweise automatisch der Motor eines Elektrofahrrads ins Bereitschaft versetzt werden, um ein unkompliziertes Losfahren zu erlauben. Alternativ oder zusätzlich kann auch die Initialisierung der Verbindung einer Drahtlosverbindung mit einem Cloud-Server initiiert werden.

## Patentansprüche

1. Verfahren zur Erkennung einer Zielposition einer Anzeige- und/oder Steuereinheit (100), insbesondere eines mobilen Endgeräts, in einer Haltevorrichtung,
wobei das Verfahren
• wenigstens eine erste Messgröße eines Sensors der Anzeige- und/oder Steuereinheit (100) erfasst (200),
**dadurch gekennzeichnet, dass**
das Verfahren
• eine zweite Messgröße eines Sendesignals eines Drahtlos-Signalübertragungsmoduls, insbesondere eines Bluetooth-Moduls, der Haltevorrichtung erfasst (210), insbesondere dessen Signalstärke, und
• eine Information über die Erreichung der Zielposition, insbesondere eine Einrastposition, der Anzeige- und/oder Steuereinheit in der Haltevorrichtung in Abhängigkeit
• eines Vergleichs (220) der ersten Messgröße mit einer ersten Vergleichsgröße, und
• einer Überschreitung (230) einer zweiten Vergleichsgröße durch die zweite Messgröße
erzeugt (240).

2. Verfahren nach Anspruch 1, **dadurch gekennzeichnet, dass**
• die erste Messgröße eine Ortsgröße repräsentiert und
• die erste Vergleichsgröße eine Startposition repräsentiert, insbesondere eine erste vorgegebene Orientierung der Anzeige- und/oder Steuereinheit (100) in Relation zu einer Aufnahme der Haltevorrichtung.

3. Verfahren nach Anspruch 1, **dadurch gekennzeichnet, dass**
• die erste Messgröße eine Lageveränderung der Anzeige- und/oder Steuereinheit (100) erfasst, insbesondere in Form eines Beschleunigungswerts oder einer Gierrate, und
• die erste Vergleichsgröße einen zeitlichen Verlauf der ersten Messgröße und/oder eine Bewegung der Anzeige- und/oder Steuereinheit (100) repräsentiert.

4. Verfahren nach einem der vorhergehenden Ansprüche, **dadurch gekennzeichnet, dass** die zweite Vergleichsgröße einen Signalschwellenwert repräsentiert, wobei insbesondere vorgesehen ist, dass der Signalschwellenwert in Abhängigkeit von der Annäherung des Drahtlos-Signalübertragungsmoduls vorgegeben wird.

5. Verfahren nach einem der vorhergehenden Ansprüche, **dadurch gekennzeichnet, dass** die Zielposition des mobilen Endgeräts in der Haltevorrichtung zusätzlich in Abhängigkeit von Erfassung eines elektrischen Kontakts (150) zwischen der Anzeige- und/oder Steuereinheit (100) und der Haltevorrichtung erkannt wird.

6. Verfahren nach einem der vorhergehenden Ansprüche, **dadurch gekennzeichnet, dass** die erste und/oder zweite Vergleichsgröße mittels einer Übertragung von der Haltevorrichtung an die Anzeige- und/oder Steuereinheit übertragen wird, insbesondere über das Sendesignal des Drahtlos-Signalübertragungsmoduls.

7. Computerprogramm zum Ausführen eines Verfahrens nach einem der Ansprüche 1 bis 6 in einer Anzeige- und/oder Steuereinheit (100) zur Erkennung einer Zielposition der Anzeige- und/oder Steuereinheit (100) in einer Haltevorrichtung, insbesondere in einem mobilen Endgerät, wobei das Computerprogramm
• wenigstens eine erste Messgröße eines Sensors der Anzeige- und/oder Steuereinheit erfasst (200),
**dadurch gekennzeichnet, dass** das Computerprogramm
• eine zweite Messgröße eines Sendesignals eines Drahtlos-Signalübertragungsmoduls, insbesondere eines Bluetooth-Moduls, der Haltevorrichtung erfasst (210), insbesondere dessen Signalstärke, und
• eine Information über die Erreichung der Zielposition, insbesondere einer Einrastposition, der Anzeige- und/oder Steuereinheit in der Haltevorrichtung in Abhängigkeit
• eines Vergleichs (220) der ersten Messgröße mit einer ersten Vergleichsgröße, und
• einer Überschreitung (230) einer zweiten Vergleichsgröße durch die zweite Messgröße
erzeugt (240).

8. Computerprogramm nach Anspruch 7, **dadurch gekennzeichnet, dass** das Programm die erste und/oder zweite Vergleichsgröße mittels einer Übertragung von der Haltevorrichtung erfasst, insbesondere über das Sendesignal des Drahtlos-Signalübertragungsmoduls.

9. Anzeige- und/oder Steuereinheit (100), insbesondere ein mobiles Endgerät, welches ein Verfahren nach einem der Ansprüche 1 bis 6 oder ein Computerprogramm nach Anspruch 7 oder 8 zur Erkennung einer Zielposition der Anzeige- und/oder Steuereinheit (100) in einer Haltevorrichtung ausführt, wobei die Anzeige- und/oder Steuereinheit (100)
• mittels eines Sensors (130, 140) eine erste Messgröße erfasst, insbesondere eine Ortsgröße,
**dadurch gekennzeichnet, dass** die Anzeige- und/oder Steuereinheit (100)
• mittels eines Empfangsmoduls eine zweite Messgröße eines Sendesignals eines Drahtlos-Signalübertragungsmoduls, insbesondere eines Bluetooth-Moduls (120), der Haltevorrichtung erfasst, insbesondere dessen Signalstärke, und
• in Abhängigkeit
• eines Vergleichs der ersten Messgröße mit einer ersten Vergleichsgröße, und
• einer Überschreitung einer zweiten Vergleichsgröße durch die zweite Messgröße
eine Information über die Erreichung der Zielposition, insbesondere einer Einrastposition, der Anzeige- und/oder Steuereinheit (100) in der Haltevorrichtung erzeugt.

10. Anzeige- und/oder Steuereinheit (100) nach Anspruch 9, **dadurch gekennzeichnet, dass** die Anzeige- und/oder Steuereinheit (100) die erste erste und/oder zweite Vergleichsgröße mittels einer Übertragung von der Haltevorrichtung erfasst, insbesondere über das Sendesignal des Drahtlos-Signalübertragungsmoduls.

## Claims

1. Method for detecting a target position of a display and/or control unit (100), in particular a mobile terminal, in a holding apparatus,
wherein the method
• records (200) at least one first measured variable for a sensor of the display and/or control unit (100), **characterized in that**
the method
• records (210) a second measured variable for a transmission signal from a wireless signal transmission module, in particular a Bluetooth module, of the holding apparatus, in particular the signal strength of said signal, and
• produces (240) information about arrival at the target position, in particular a latching position, of the display and/or control unit in the holding apparatus on the basis
• of a comparison (220) of the first measured variable with a first comparison variable, and
• of the exceeding (230) of a second comparison variable by the second measured variable.

2. Method according to Claim 1, **characterized in that**
• the first measured variable represents a location variable and
• the first comparison variable represents a starting position, in particular a first predefined orientation of the display and/or control unit (100) in relation to a receptacle of the holding apparatus.

3. Method according to Claim 1, **characterized in that**
• the first measured variable records a change of attitude of the display and/or control unit (100), in particular in the form of an acceleration value or a yaw rate, and
• the first comparison variable represents a time characteristic of the first measured variable and/or a movement of the display and/or control unit (100).

4. Method according to one of the preceding claims, **characterized in that** the second comparison variable represents a signal threshold value, there being in particular provision for the signal threshold value to be predefined on the basis of the approach of the wireless signal transmission module.

5. Method according to one of the preceding claims, **characterized in that** the target position of the mobile terminal in the holding apparatus is additionally detected on the basis of detection of electrical contact (150) between the display and/or control unit (100) and the holding apparatus.

6. Method according to one of the preceding claims, **characterized in that** the first and/or second comparison variable is transmitted by means of a transmission from the holding apparatus to the display and/or control unit, in particular by way of the transmission signal from the wireless signal transmission module.

7. Computer program for carrying out a method according to one of Claims 1 to 6 in a display and/or control unit (100) to detect a target position of the display and/or control unit (100) in a holding apparatus, in particular in a mobile terminal, wherein the computer program
• records (200) at least one first measured variable for a sensor of the display and/or control unit, **characterized in that** the computer program
• records (210) a second measured variable for a transmission signal from a wireless signal transmission module, in particular a Bluetooth module, of the holding apparatus, in particular the signal strength of said signal, and
• produces (240) information about arrival at the target position, in particular a latching position, of the display and/or control unit in the holding apparatus on the basis
• of a comparison (220) of the first measured variable with a first comparison variable, and
• of the exceeding (230) of a second comparison variable by the second measured variable.

8. Computer program according to Claim 7, **characterized in that** the program records the first and/or second comparison variable by means of a transmission from the holding apparatus, in particular by way of the transmission signal from the wireless signal transmission module.

9. Display and/or control unit (100), in particular a mobile terminal, which carries out a method according to one of Claims 1 to 6 or executes a computer program according to Claim 7 or 8 to detect a target position of the display and/or control unit (100) in a holding apparatus, wherein the display and/or control unit (100)
• uses a sensor (130, 140) to record a first measured variable, in particular a location variable,
**characterized in that** the display and/or control unit (100)
• uses a receiving module to record a second measured variable for a transmission signal from a wireless signal transmission module, in particular a Bluetooth module (120), of the holding apparatus, in particular the signal strength of said signal, and
• takes a comparison of the first measured variable with a first comparison variable, and
• the exceeding of a second comparison variable by the second measured variable
as a basis for producing information about arrival at the target position, in particular a latching position, of the display and/or control unit (100) in the holding apparatus.

10. Display and/or control unit (100) according to Claim 9, **characterized in that** the display and/or control unit (100) records the first and/or second comparison variable by means of a transmission from the holding apparatus, in particular by way of the transmission signal from the wireless signal transmission module.

## Revendications

1. Procédé de reconnaissance d'une position cible d'une unité d'affichage et/ou de commande (100), en particulier d'un terminal mobile, dans un dispositif de maintien,
le procédé
• acquérant (200) au moins une première grandeur de mesure d'un capteur de l'unité d'affichage et/ou de commande (100),
**caractérisé en ce que**
le procédé
• acquiert (210) une deuxième grandeur de mesure d'un signal d'émission d'un module de transmission de signal sans fil, en particulier d'un module Bluetooth, du dispositif de maintien, en particulier son intensité de signal, et
• génère (240) une information à propos de l'atteinte de la position cible, en particulier d'une position d'encliquetage, de l'unité d'affichage et/ou de commande dans le dispositif de maintien en fonction
• d'une comparaison (220) de la première grandeur de mesure avec une première grandeur de comparaison, et
• d'un dépassement (230) d'une deuxième grandeur de comparaison par la deuxième grandeur de mesure.

2. Procédé selon la revendication 1, **caractérisé en ce que**
• la première grandeur de mesure représente une grandeur locale et
• la première grandeur de comparaison représente une position de départ, en particulier une première orientation prédéfinie de l'unité d'affichage et/ou de commande (100) en relation avec un logement du dispositif de maintien.

3. Procédé selon la revendication 1, **caractérisé en ce que**
• la première grandeur de mesure acquiert un changement de position de l'unité d'affichage et/ou de commande (100), en particulier sous la forme d'une valeur d'accélération ou d'un taux de lacet, et
• la première grandeur de comparaison représente une évolution dans le temps de la première grandeur de mesure et/ou un mouvement de l'unité d'affichage et/ou de commande (100).

4. Procédé selon l'une quelconque des revendications précédentes, **caractérisé en ce que** la deuxième grandeur de comparaison représente une valeur de seuil de signal, en prévoyant notamment que la valeur de seuil de signal est prédéfinie en fonction de l'approche du module de transmission de signal sans fil.

5. Procédé selon l'une des revendications précédentes, **caractérisé en ce que** la position cible du terminal mobile dans le dispositif de maintien est en plus reconnue en fonction de la détection d'un contact électrique (150) entre l'unité d'affichage et/ou de commande (100) et le dispositif de maintien.

6. Procédé selon l'une des revendications précédentes, **caractérisé en ce que** la première et/ou la deuxième grandeur de comparaison est transmise au moyen d'une transmission du dispositif de maintien à l'unité d'affichage et/ou de commande, notamment par le biais du signal d'émission du module de transmission de signal sans fil.

7. Programme informatique destiné à mettre en œuvre un procédé selon l'une des revendications 1 à 6 dans une unité d'affichage et/ou de commande (100) en vue de la reconnaissance d'une position cible de l'unité d'affichage et/ou de commande (100) dans un dispositif de maintien, en particulier dans un terminal mobile, le programme informatique
• acquérant (200) au moins une première grandeur de mesure d'un capteur de l'unité d'affichage et/ou de commande,
**caractérisé en ce que** le programme informatique
• acquiert (210) une deuxième grandeur de mesure d'un signal d'émission d'un module de transmission de signal sans fil, en particulier d'un module Bluetooth, du dispositif de maintien, en particulier son intensité de signal, et
• génère (240) une information à propos de l'atteinte de la position cible, en particulier d'une position d'encliquetage, de l'unité d'affichage et/ou de commande dans le dispositif de maintien en fonction
• d'une comparaison (220) de la première grandeur de mesure avec une première grandeur de comparaison, et
• d'un dépassement (230) d'une deuxième grandeur de comparaison par la deuxième grandeur de mesure.

8. Programme informatique selon la revendication 7, **caractérisé en ce que** le programme acquiert la première et/ou la deuxième grandeur de comparaison au moyen d'une transmission par le dispositif de maintien, en particulier par le biais du signal d'émission du module de transmission de signal sans fil.

9. Unité d'affichage et/ou de commande (100), en particulier un terminal mobile,
laquelle met en œuvre un procédé selon l'une des revendications 1 à 6 ou exécute un programme informatique selon la revendication 7 ou 8 en vue de la reconnaissance d'une position cible de l'unité d'affichage et/ou de commande (100) dans un dispositif de maintien, l'unité d'affichage et/ou de commande (100)
• acquérant une première grandeur de mesure, notamment une grandeur locale, au moyen d'un capteur (130, 140), **caractérisée en ce que** l'unité d'affichage et/ou de commande (100)
• acquiert, au moyen d'un module de réception, une deuxième grandeur de mesure d'un signal d'émission d'un module de transmission de signal sans fil, en particulier d'un module Bluetooth (120), du dispositif de maintien, en particulier son intensité de signal, et
• en fonction
• d'une comparaison de la première grandeur de mesure avec une première grandeur de comparaison, et
• d'un dépassement d'une deuxième grandeur de comparaison par la deuxième grandeur de mesure
génère une information à propos de l'atteinte de la position cible, en particulier d'une position d'encliquetage, de l'unité d'affichage et/ou de commande (100) dans le dispositif de maintien.

10. Unité d'affichage et/ou de commande (100) selon la revendication 9, **caractérisée en ce que** l'unité d'affichage et/ou de commande (100) acquiert la première et/ou la deuxième grandeur de comparaison au moyen d'une transmission par le dispositif de maintien, en particulier par le biais du signal d'émission du module de transmission de signal sans fil.
